# EUROPEAN PATENT APPLICATION

(11) **EP 4 769 798 A1**
(43) Date of publication of application: **01.07.2026**
(21) Application number: 25730133.3
(22) Date of filing: 17.01.2025
(51) Int. Cl.: H01M 50/503, H01M 50/516, H01M 50/522

(54) **ADAPTER PIECE STRUCTURE, BATTERY CELL STRUCTURE AND ASSEMBLY PROCESS METHOD THEREFOR, AND LARGE-CAPACITY ENERGY STORAGE BATTERY**

(30) Priority: 28.10.2024 CN 202422608575 U; 28.10.2024 CN 202411513878
(71) Applicant: Eve Energy Co., Ltd., Huizhou, Guangdong 516006 (CN); Eve Power Co., Ltd., Jingmen, Hubei 448000 (CN); Eve Energy Storage Co., Ltd, Wuhan, Hubei 430074 (CN)
(72) Inventor: LIU, Jianhua, Huizhou, Guangdong 516006 (CN); LIN, Chenneng, Huizhou, Guangdong 516006 (CN); HE, Wei, Huizhou, Guangdong 516006 (CN); CHEN, Liquan, Huizhou, Guangdong 516006 (CN); SONG, Shuaishuai, Huizhou, Guangdong 516006 (CN); YUAN, Dingding, Huizhou, Guangdong 516006 (CN)
(74) Representative: Berggren Oy
(86) International application number: PCT/CN2025/072970
(87) International publication number: WO 2026/091318

(57) **Abstract**

The present application provides an adapter piece structure, a battery cell structure and an assembly process therefor, as well as a battery for large-scale energy storage. The adapter piece structure includes a tab connecting portion and a terminal connecting portion, the tab connecting portion is configured to connect with a tab of a battery cell, and the terminal connecting portion is connected with the tab connecting portion. The terminal connecting portion has a first side, the first side has a clean area provided to be cleaned, and the clean area includes a welding area and an annular area arranged around a circumference of the welding area. The welding area is configured for welding the terminal connecting portion with a terminal of a cover plate.

## Description

This application claims priority to Chinese Patent Applications No. 202422608575.3 and No. 202411513878.5 filed with the Chinese Patent Office on October 28, 2024. The disclosures of the aforementioned applications are hereby incorporated by reference in their entireties.

### TECHNICAL FIELD

The present application relates to the technical field of energy storage, and more particularly, to an adapter piece structure, a battery cell structure and an assembly process therefor, as well as a battery for large-scale energy storage.

### BACKGROUND

A conventional assembly method for a square battery is now to pair battery cells and weld the battery cells with adapter pieces, and then weld and fix welding areas of the adapter pieces with terminals of a cover plate by laser welding.

### SUMMARY

However, the adapter piece and the terminal have a flaw in welding due to the foreign matters attached in the welding area or the oxide layer in the welding area.

In a first aspect, the present application provides an adapter piece structure. The adapter piece structure includes:
a tab connecting portion configured to connect with a tab of a battery cell;
a terminal connecting portion connected with the tab connecting portion, the terminal connecting portion having a first side, the first side having a clean area provided to be cleaned, the clean area including a welding area and an annular area arranged around a circumference of the welding area, and the welding area being configured for welding the terminal connecting portion with a terminal of a cover plate.

In a second aspect, the present application also provides a battery cell structure. The battery cell structure includes the adapter piece structure.

In a third aspect, the present application further provides an assembly process for battery cell structure, the assembly process of battery cell structure includes the steps of:
providing two adapter piece structures, each of the adapter piece structures including the terminal connecting portion with the first side; and cleaning the first side to form a clean area on the first side, the clean area including a welding area and an annular area arranged around a circumference of the welding area; and
providing a cover plate, the cover plate including two terminals arranged at intervals in a Y direction, and welding and fixing the two terminals to corresponding terminal connecting portions at two welding areas, respectively.

In a fourth aspect, the present application also provides a battery for large-scale energy storage. The battery for large-scale energy storage includes the battery cell structure.

### BENEFICIAL EFFECT

According to the adapter piece structure provided in the present application, the adapter piece includes a tab connecting portion and a terminal connecting portion, and the tab connecting portion is specifically used for connecting the tab of the battery cell, and the terminal connecting portion is used for connecting the external terminal. As such, these members have respective tasks, which improves the stability and reliability of the overall structure. The clean area includes the welding area and the annular area surrounding the welding area. This design is intended to ensure that the welding area is in clean state before welding, thereby avoiding the effects of impurities, oxides and the like on the quality of the welding, and improving the strength and reliability of the welding. The welding surface is clean to help to reduce poor contact due to factors such as corrosion, oxidation, and the like, thereby extending the service life of the battery pack for large-scale energy storage or related devices. By clearly defining the clean area, subsequent maintenance and cleaning are made more targeted, and maintenance difficulty and cost are reduced. By welding the terminal connecting portion to the terminal of the battery cell firmly, the stability and strength of the entire structure is enhanced, which helps to resist external factors such as vibration and impact. In addition, the presence of the "annular area" surrounding the welding area helps to prevent external contaminants from intruding into the welding area during welding or connection, thereby improving the purity and stability of the connection and ensuring that the terminal connecting portion and the terminal can form a high-quality welding.

### BRIEF DESCRIPTION OF THE DRAWINGS

FIG. 1 is a schematic structural diagram of an adapter piece structure according to some embodiments of the present application;
FIG. 2 is a schematic structural diagram of a battery cell structure according to some embodiments of the present application;
FIG. 3 is a schematic structural diagram of an adapter piece and a terminal shown in FIG. 2;
FIG. 4 is another schematic structural diagram of an adapter piece and a terminal shown in FIG. 2;
FIG. 5 is a schematic structural diagram of a terminal connecting portion and a terminal shown in FIG. 2;
FIG. 6 is a partially enlarged schematic view of A shown in FIG. 5;
FIG. 7 is a first flow chart of an assembly process of a battery cell structure according to some embodiments of the present application; and
FIG. 8 is a second flow chart of an assembly process of a battery cell structure according to some embodiments of the present application.

### Reference Numerals:

100. battery cell structure;
10. adapter piece structure;
1. tab connecting portion, 11. main body, 12. connecting arm;
2. terminal connecting portion, 21. first side, 211. clean area, 2111. a welding area, 2112. annular area;
31. groove, 32. protrusion; and
20. battery cell, 201. tab, 202. first tab, 203. second tab, 30. cover plate, 301. terminal.

### DETAILED DESCRIPTION OF THE EMBODIMENTS

In the description of the present application, unless otherwise expressly defined and defined, the terms "link", "connect", "fix" are to be understood in a broad sense, for example, as a fixed connection, as a detachable connection, or as a whole; may be as a mechanical connection or an electrical connection; may be as a directly connection or indirectly connection by means of an intermediate medium; may be as internal communication of the two elements or interaction of the two elements. The specific meaning of the above terms in the present application may be understood by one of the ordinary skill in the art as the case may be.

In the description, unless otherwise expressly defined and defined, that the first feature is "on" or "under" the second feature includes that the first feature may direct contact the second feature, as well as that the first feature indirect contact the second feature by an additional feature therebetween. Moreover, that the first feature is "over", "above" or "on" the second feature includes that the first feature directly above and obliquely above the second feature, as well as that the first feature is higher than the second feature. That the first feature is "down", "below" or "under" the second feature includes that the first feature directly below and obliquely above the second feature, as well as that the first feature is lower than the second feature.

In the description of the embodiments, the orientation or the positional relationship with the terms " up", " down", " left ", " right ", " front ", " rear ", is based on the orientation or the positional relationship in the drawings. The terms are used for description and brief, rather than indicating or implying the device or the element referred to has a special orientation, or configured and operated in a special orientation. Thus, these terms should not be understood as limitations on the present application. Furthermore, the terms "first" and "second" are used to distinguish between descriptions and have no particular meaning.

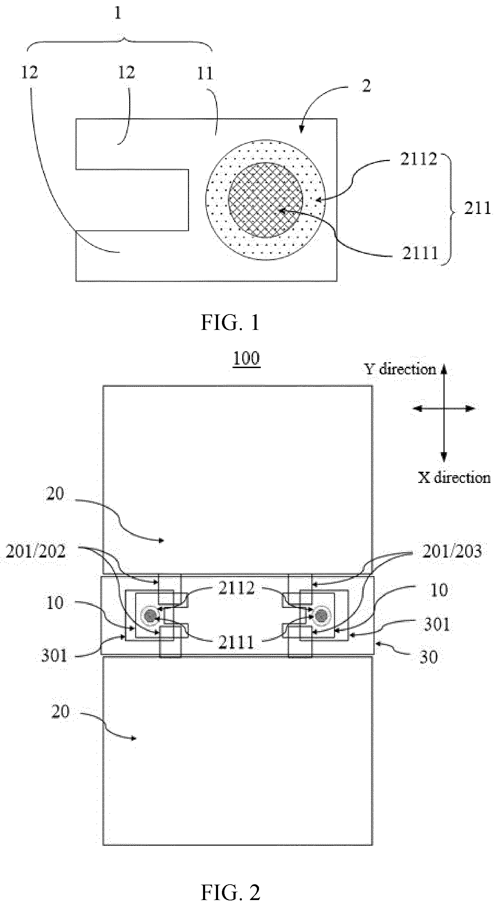

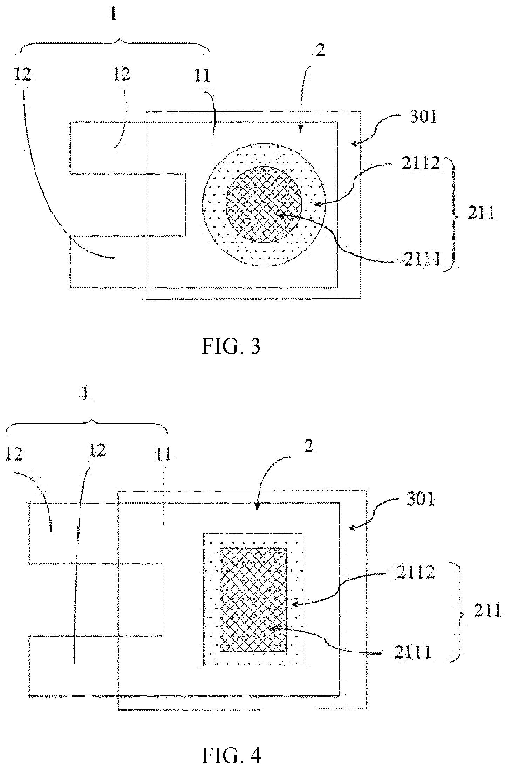

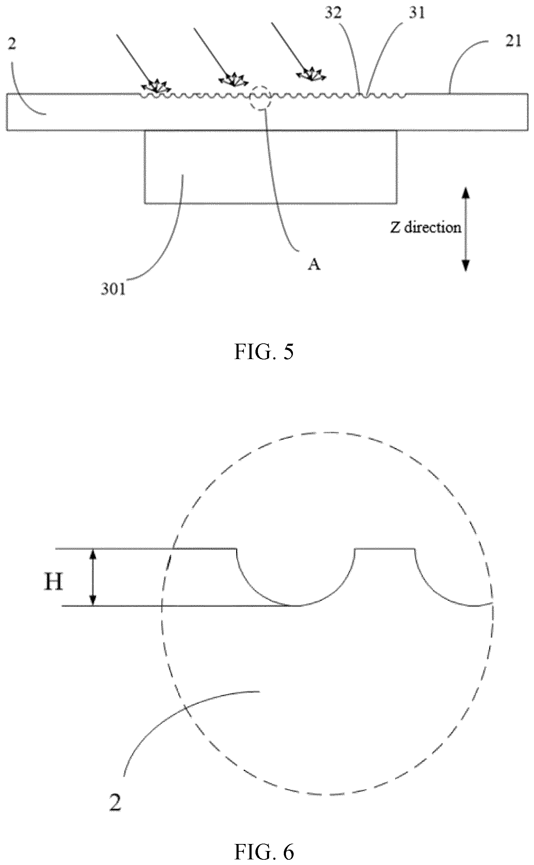

In view of this, the present application provides an adapter piece structure, a battery cell structure and an assembly process thereof, and a battery for large-scale energy storage. FIG. 1 is a schematic structural diagram of an adapter piece structure according to some embodiments of the present application. FIG. 2 is a schematic structural diagram of a battery cell structure according to some embodiments of the present application. FIG. 3 is a schematic structural diagram of an adapter piece and a terminal shown in FIG. 2. FIG. 4 is another schematic structural diagram of an adapter piece and a terminal shown in FIG. 2. FIG. 5 is a schematic structural diagram of a terminal connecting portion and a terminal shown in FIG. 2. The adapter piece structure provided in the present application ensures that the welding area thereof for welding with the terminal is cleaned, and avoids welding defects due to foreign matters or oxidation and the like. The assembly of the battery cell will be described in detail below in connection with the main drawings.

Referring to FIGS. 1 and 2, an adapter piece structure 10 includes a tab connecting portion 1 configured to connect with a tab 201 of a battery cell 20 and a terminal connecting portion 2 connected to the tab connecting portion 1. The terminal connecting portion 2 has a first side 21 with a clean area 211 provided to be cleaned, and the clean area 211 includes a welding area 2111 and an annular area 2112 provided around the circumference of the welding area 2111. The welding area 2111 is provided for welding the terminal connecting portion 2 to the terminal 301 of the cover plate 30.

It should be noted that, referring to FIG. 5, the first side 21 refers to the side of the terminal connecting portion 2 away from the terminal 301.

In the embodiments of the present application, the adapter piece structure 10 is defined as the tab connecting portion 1 and the terminal connecting portion 2, the tab connecting portion 1 is configured to connect with the tab 201 of the battery cell 20, and the terminal connecting portion 2 is provided to be connected to the terminal 301 of the cover plate 30, thereby improving stability and reliability of the overall structure. The first side 21 has the clean area 211 arranged to be cleaned, the clean area 211 includes a welding area 2111 and an annular area 2112 surrounding the welding area 2111, of which the design is intended to ensure that the welding area 2111 is in clean state before welding, to avoid welding defects caused by impurities, oxides, and the like, thereby improving strength and reliability of the welding. The clean welding surface helps to reduce poor contact caused by corrosion, oxidation, and the like, thereby prolonging the service life of the battery for large-scale energy storage or related equipment. The terminal connecting portion 2 is firmly connected to the terminal 301 of the cover plate 30 by welding, thereby enhancing the stability and strength of the overall structure and contributing to resistance to external factors such as vibration and impact. The presence of the annular area 2112 surrounding the welding area 2111 helps to prevent foreign contaminants from intruding into the welding area 2111 during welding or connecting, thereby improving the purity and stability of the connection and ensuring that the terminal connecting portion 2 and the terminal 301 can form a high-quality welding.

There are various shapes of the welding area 2111 and the annular area 2112 surrounding the welding area 2111. For example, referring to FIG. 3, in an embodiment, the welding area 2111 has a circular shape and the annular area 2112 has a circular and annular shape. Referring to FIG. 4, in yet another embodiment, the shape of the welding area 2111 is rectangular, and the shape of the annular area 2112 is square and annular. In yet another embodiment, the welding area 2111 has a circular shape and the annular area 2112 has a square and annular shape. Certainly, in other embodiments, the welding area 2111 may also be an irregular shape, and similarly, the annular area 2112 may be an irregular and annular shape. Illustratively, the shapes of the welding area 2111 and the annular area 2112 may be provided as desired, which is not limited in the present application.

Note that there is a plurality of ways to clean the first side 21 to define the clean area. For example, in an embodiment, the first side 21 is pre-cleaned by laser, so that foreign matters on the surface of the first side 21 are vaporized at a high temperature, and welding defects are reduced. Moreover, the surface of the first side 21 can be etched during the pre-cleaning by laser, so that a smooth surface becomes roughened. When the laser strikes the surface of the first side 21, diffuse reflection occurs rather than specular reflection (as shown FIG. 4). The energy loss is less, and most of the energy is absorbed by the welding member, thereby reducing the risk of false welding. The laser cleaning technique is applied before welding the terminal connecting portion 2, and the quality of the laser penetration welding of the terminal connecting portion 2 is improved, thereby reducing poor welding appearance. Centrality, in other embodiments, the first side 21 may be subjected to a cleaning process such as sand blasting, wet chemical cleaning, deionized water cleaning, or ultrasonic cleaning to form the clean area. Illustratively, the present application does not limit the specific manner in which the first side 21 is cleaned to form the clean area.

The first side 21 of the terminal connecting portion 2 is cleaned by the laser emitted from the laser device. In an embodiment, the power of the laser ranges from 100W to 700W to efficiently remove of the oxide layers on the surface of the adapter piece to ensure uniform thermal absorption and conduction during the welding process. In addition, the surface of the first side 21 may be roughened so that specular reflection changes to diffuse reflection during the laser welding process. As such, energy loss and false welding are reduced, and welding reliability is improved. When the power of the laser is low (<100W), the cleaning depth (<0.5µm) is limited due to insufficient energy density, so that the oxide layers on the surface of the first side 21 are not removed. As such, the surface roughness of the first side 21 is not sufficient to achieve the effect for the laser welding to reduce the intensity of diffuse reflection, causing most of the energy loss, resulting in the false welding in the subsequent laser penetration welding. When the power of the laser is high (>700W), the energy density is significantly increased, and the cleaning depth is much greater than 1000µm. Although the surface of the first side 21 can be rapidly heated to remove the contaminants in the deep layers of the material, the surface of the first side 21 may be seriously uneven. As such, the defocus amount of the laser welding fluctuates greatly, easily resulting in the welding defects.

The first side 21 of the terminal connecting portion 2 is cleaned by the laser emitted from the laser device. In an embodiment, the frequency of the laser ranges from 100Hz to 800Hz, so that the oxide layers on the surface of the adapter piece can be effectively removed to ensure uniform thermal absorption and conduction during the welding process. In addition, the surface of the first side 21 may be roughened so that specular reflection changes to diffuse reflection during the laser welding process. As such, energy loss and false welding are reduced, and welding reliability is improved. When the frequency is lower than 100Hz, the density of the cleaning points is significantly reduced, resulting in an increase in the spacing between the cleaning points. As such, the clean area 211 cannot be effectively and entirely covered, resulting in that part of the area is not cleaned. When the frequency is higher than 800Hz, the density of the cleaning points is too high, and adjacent cleaning points may coincide, causing that part of the area is irradiated with a plurality of laser pulses to produce an uneven cleaning effect. The cleaning depth is not only affected by the power of the laser, but also regulated by the frequency of the laser. High frequency of the laser pulse can increase the density of the cleaning points, while leading to excessive cleaning of part of the area due to a plurality of irradiation, and causing the cleaning depth exceeding expectations (for example, cleaning depth>1000µm). Although it is possible to rapidly heat and remove the contaminants in the deep layers of the material, the surface of the first side 21 may be seriously uneven. As such, the defocus amount of the laser welding fluctuates greatly, easily resulting in the welding defects. In contrast, the laser pulse with low frequency may not achieve sufficient cleaning depth due to the low density of the cleaning points, so that the surface oxide layers on the first side 21 are not removed and the surface roughness on the first side 21 is not sufficient to achieve the effect for the laser welding to reduce the intensity of diffuse reflection, causing most of the energy loss, resulting in the false welding in the subsequent laser penetration welding.

The first side 21 of the terminal connecting portion 2 is cleaned by the laser emitted from the laser device. In an embodiment, the scanning speed of the laser ranges from 500mm/s to 20000mm/s, which helps to maintain the stability and uniformity of the laser energy, thereby achieving a high-quality cleaning or welding effect. In addition, the oxide layers on the surface of the adapter piece can be effectively removed to ensure uniform thermal absorption and conduction during the welding process. In addition, the surface of the first side 21 can be roughened, so that specular reflection changes to diffuse reflection during the laser welding process. As such, energy loss and false welding are reduced , and welding reliability is improved. When the scanning speed is lower than 500mm/s, the welding beat (or cleaning cycle) is correspondingly prolonged due to too slow processing speed, resulting in a decrease in the production capacity. When the scanning speed is too high (over 20000mm/s), the laser spends extremely short time on the surface of the material. As such, the laser energy is insufficiently applied to the surface of the material, causing energy instability and cleaning unevenness. When the scanning speed is lower than 500mm/s, the production efficiency is significantly reduced, which affects the production capacity.

Referring to FIG. 1, in an embodiment, the distance L is defined between the boundary of the welding area 2111 and the outer circumferential boundary of the annular area 2112, where L≥1.0mm. As such, the distance between the boundary of the welding area 2111 and the outer circumferential boundary of the annular area 2112 is equal to or greater than 1.0 mm to provide a larger fault-tolerant space for the welding operation. In the welding process, even if there is a slight deviation or fluctuation, it is possible to ensure that the welding completely operates in the clean area as long as the deviation is within the distance between the boundary of the welding area 2111 and the outer circumferential boundary of the annular area 2112. Thus, it avoids a poor welding or incomplete welding, and improvs the overall quality of the welding. During welding, a large amount of thermal is generated, and the distance between the boundary of the welding area 2111 and the outer circumferential boundary of the annular area 2112 is equal to or greater than 1.0 mm to serve as a buffer area for the thermal to help disperse and alleviate the thermal concentrated in the welding area 2111, and reduce the influence of the thermal stress on the welding quality, which helps to improve the thermal stability and durability of the welding. The distance between the boundary of the bonding pad 2111 and the outer circumferential boundary of the annular area 2112 is greater than or equal to 1.0 mm, making it easier to control the size and shape of the welding area 2111 and the annular area 2112 during processing, thereby reducing processing difficulty and cost. Meanwhile, in a subsequent maintenance process, a design in which the distance between the boundary of the welding area 2111 and the outer circumferential boundary of the annular area 2112 is equal to or greater than 1.0 mm also makes it easier to clean and inspect the first side, thereby reducing the complexity and cost of maintenance. When the distance between the boundary of the weld area 2111 and the outer circumferential boundary of the annular area 2112 is great enough (L≥1.0mm), it is possible to more effectively quarantine and remove contaminants around the welding area 2111 to ensure that the welding area 2111 reaches a high cleanliness standard before welding, so that a cleaner and more stable welding interface can be obtained during laser welding, thereby improving the quality and strength of the welding.

In addition, when the distance between the boundary of the welding area 2111 and the boundary of the outer circumferential boundary of the annular area 2112 is less than 1 mm, an extremely high precision is required in laser welding to control the welding position to ensure that the welding points completely fall in the welding area 2111. This almost meets the operational requirements at the micron level and poses a very high challenge to the accuracy of the equipment and the technical level of the operator. When the distance between the boundary of the welding area 2111 and the outer circumferential boundary of the annular area 2112 is less than 1 mm, it is impossible for almost any impurity or contaminant around the welding area 2111 to be contained and quarantined between the boundary of the welding area 2111 and the outer circumferential boundary of the annular area 2112, and it is difficult to ensure that the welding area 2111 meets a desired cleanliness standard before welding even if a rigorous cleaning process is performed. Small factors such as thermal, air flow generated in the welding process, and the like may have a significant effect on the cleaning effect in such a small distance, resulting in unstable welding quality. The distance less than 1 mm between the boundary of the welding area 2111 and the outer circumferential boundary of the annular area 2112 greatly limits the selection and adjustment range of the welding process, so that the process adaptability in the production process becomes extremely poor.

It should be noted that the distance between the boundary of the welding area 2111 and the outer circumferential boundary of the annular area 2112 may be 1 mm, 1.1mm, 1.3mm, 1.5 mm, 1.6mm, 1.8mm, 2 mm, 2.3mm or 2.5 mm, and the like. Illustratively, the distance between the boundary of the welding area 2111 and the outer circumferential boundary of the annular area 2112 may be selected as required, which is not limited in the present application.

In an embodiment, the welding area 2111 has an area S1, the clean area 211 has an area S2, and the first side has a surface area S3, where S1, S2 and S3 satisfy: 0<S1/S2<1, and/or 0<S2/S3≤1. When the ratio of S1/S2 is less than 1, it is ensured that the welding area 2111 is completely inside the clean area 211, so that the welding area 2111 is in clean state before welding, thereby avoiding welding defects caused by impurities, oxides, and the like. At the same time, with the ratio of S1/S2 less than 1, it also protects the welding area 2111 from contaminants such as impurities and oxides during the welding process. When the ratio of S2/S3 is less than or equal to 1, it is achieved that the area of the clean area 211 is greater than or equal to the surface area of the first side, which means that the clean area 211 covers almost all the surface of the first side. As such, the clean area 211 is large for facilitating the welding operation. When S1, S2 and S3 satisfy: 0<S1/S2<1 and 0<S2/S3≤1, the welding operation is realized while ensuring the welding quality and cleanliness.

It should be noted that the value of S1/S2 may be 0.1, 0.2, 0.3, 0.35, 0.4, 0.5, 0.54, 0.55, 0.6, 0.65, 0.7, 0.75, 0.8, 0.85, 0.9, or 0.95, and the like. Illustratively, the ratio of S1/S2 may be selected as desired, which is not limited herein. In addition, the ratio of S2/S3 may be 0.1, 0.15, 0.18, 0.2, 0.25, 0.3, 0.35, 0.4, 0.5, 0.54, 0.55, 0.6, 0.65, 0.7, 0.75, 0.8, 0.85, 0.9, 0.95, or 1, or the like, and illustratively, the ratio of the S2/S3 may be selected as required, which is not limited in the present application.

Referring to FIGS. 5 and 6, in an embodiment, the depth of the clean area 211 is H, where 0.5µm≤H≤1000µm. In this way, when the depth of the clean area 211 is too shallow less than 0.5µm, the oxide layers or impurities on the surface of the first side 21 cannot be completely removed, so that the surface roughness of the clean area 211 is not sufficient to achieve the effect for the laser welding to reduce the intensity of diffuse reflection, causing most of the energy loss, and resulting in the false welding in the subsequent laser penetration welding. When the depth of the clean area 211 is greater than 1000µm, the surface of the first side 21 may be seriously uneven, the defocus amount of the laser welding fluctuates greatly, and easily resulting in the welding defects. When the depth of the clean area 211 ranges from 0.5µm to 1000µm, it can be ensured that the oxide layers or impurity on the surface of the first side 21 are completely removed. Moreover, the roughness of the surface of the first side 21 can be improved with this depth range to meet the requirements for laser welding. When the surface roughness is moderate, the intensity of diffuse reflection of the laser welding is reduced, thereby reducing the energy loss and improving the welding efficiency and quality. When the depth of the clean area 211 ranges from 0.5µm to 1000µm, welding defects due to insufficient cleaning or excessive cleaning can be avoided. Such as false welding, gas holes, slag inclusion, and the like, can be effectively controlled. When the depth of the clean area 211 ranges from 0.5µm to 1000µm, the energy transmission in the welding process can be made more stable, and the fluctuation on welding effect due to the change of the surface state is reduced.

Referring to FIG. 5, in an embodiment, the clean area 211 is provided with a groove 31 and a plurality of protrusions 32. A plurality of the grooves 31 and the plurality of protrusions 32 are alternately arranged to significantly increase the roughness of the surface of the clean area 211. The original smooth surface becomes uneven after being cleaned, which is critical for laser welding, because the smooth surface is susceptible to specular reflection, the laser beam is mostly reflected back directly, and the energy received by the welding member is greatly reduced. The rough surface is more prone to diffuse reflection, and the laser beam is scattered across the surface, which increases the contact area and contact time with the welding member, thereby increasing the energy absorption efficiency. This diffuse reflection phenomenon enables laser energy to be more evenly distributed in the welding area 2111, thereby reducing the energy loss due to reflection. Most of the laser energy can be efficiently absorbed by the welding member and converted into thermal energy to melt the metal, thereby achieving high quality welding. After defining the grooves 31 and the protrusions 32 on the clean area 211, the welding member can receive enough energy to melt the metal and form a strong metallurgical bond due to the reduced energy loss and more uniform distribution. Thus, this design helps reduce the risk of false welding and improves the strength and reliability of the welding joint.

Referring to FIGS. 1 and 2, in an embodiment, the tab connecting portion 1 includes a main body 11 and two connecting arms 12. The main body 11 is connected to the terminal connecting portion 2. The two connecting arms 12 are arranged oppositely and at intervals, and one end of each of the two connecting arms 12 is connected to the main body 11. One of the two connecting arms 12 and/or the main body 11 is configured to connect with one of two opposite and aligned tabs 201 of two adjacent battery cells 20, and the other of the two connecting arms 12 and/or the main body 11 is configured to connect with the other of the two opposite and aligned tabs 201 of the two adjacent battery cells 20. The main body 11 serves as a battery cell part for the tab connecting portion 1, which carries out a connection task with the terminal connecting portion 2, to ensure that current can be smoothly transmitted to each part of the battery for large-scale energy storage. The two connecting arms 12 are arranged oppositely and at intervals, and this design ensures the stability of the connection and enables the connecting arms 12 to be flexibly connected to the tabs 201 of the adjacent battery cells 20. An end of the connecting arm 12 is connected to the main body 11 to form a stable supporting structure. Each of the connecting arms 12 and/or the main body 11 is designed to be connectable to the specific tabs 201 of the adjacent battery cells 20, and this alignment connection not only simplifies the connection process but also improves the accuracy and reliability of the connection. When the battery for large-scale energy storage is operated, the current enters the main body 11 through the terminal connecting portion 2, and then flows to the tabs 201 of the adjacent battery cells 20 through the two connecting arms 12, respectively, so that efficient transmission of the current is realized. This design greatly enhances the stability of the connection due to the fact that the two connecting arms 12 are arranged opposite and at intervals and are closely connected to the main body 11. Even in harsh environments such as vibration or impact, the firm connection can be maintained. The alignment connection allows the current to be transmitted directly and efficiently to the tabs 201 of the adjacent battery cells 20, reducing the energy loss during transmission. When it is necessary to maintain or replace the battery cell 20, it is easy to operate only by disconnecting the corresponding connecting arm 12 from the tab 201. This modular design simplifies the maintenance process, reducing maintenance costs and time.

It should be noted that, in an embodiment, the two connecting arms 12 may be arranged to connected with the two opposite and aligned tabs 201 of the two adjacent battery cells 20, so that the operation of connecting the tabs 201 and the connecting arms 12 is simple. In yet another embodiment, the other of the two connecting arms 12 and the main body 11 are arranged to connected with one of the two opposite and aligned tabs 201 of the two adjacent battery cells 20, and the other of the two connecting arms 12 and the main body 11 are arranged to connected with the other of the two opposite and aligned tabs 201 of the two adjacent battery cells 20. As such, the tab 201 and the tab connecting portion 1 are firmly connected. In another embodiment, the main body 11 may also be connected to the two opposite and aligned tabs 201 of the two adjacent battery cells 20, respectively. Illustratively, the present application may select the manner in which the tab connecting portion 1 is connected to the tab 201 as required, which is not limited in the present application.

In an embodiment, the clean area 211 has an area S2, the main body 11 has a second side on the same side as the first side, the surface area of the second side is S4, and the surface area of the first side is S3, where S3, S4, S2 satisfy: S3+S4>S2. In this way, it is achieved that the surface of the first side and the surface of the second side is not completely cleaned, so that it is achieved that waste of resources is avoided while the cleaning effect is ensured, and cost is saved. Since it is only necessary to ensure that the welding area 2111 is in a clean state, however, S3+S4=S2 results in that the surface of the first side and the surface of the second side are cleaned completely, which is a waste of resources, and increases the production cost.

Referring to FIG. 2, an embodiment of the present application further provides a battery cell structure 100. The battery cell structure 100 includes the adapter piece structure 10. A specific structure of the adapter piece structure 10 is described with reference to the embodiments. Since the battery cell structure 100 employs all the technical solutions of all the embodiments, at least all the beneficial effects of the technical solutions of the embodiments are not described herein.

With continued reference to FIG. 2, in an embodiment, the battery cell structure 100 further includes two battery cells 20, two adapter piece structures 10, and a cover plate 30. The two battery cells 20 are arranged at intervals in X direction, each of the two battery cells 20 has a first tab 202 and a second tab 203 arranged at intervals in Y direction. The two first tabs 202 of the two battery cells 20 are opposite and aligned, and the two second tabs 203 of the two battery cells 20 are opposite and aligned. The tab connecting portion 1 of one of the two adapter piece structures 10 is connected to the two first tabs 202 opposite and aligned, and the tab connecting portion 1 of the other of the two adapter piece structures 10 is connected to the two second tabs 203 opposite and aligned. The cover plate 30 is provided with two terminals 301 arranged at intervals in the Y direction, and the two terminals 301 are welded to the corresponding terminal connecting portions 2 at two welding areas 2111, respectively. Thus, the two battery cells 20 are arranged at intervals in the X direction, and this arrangement facilitates thermal dissipation and reduces stress concentration inside the battery cells 20. Each of the battery cells 20 has the first tab 202 and the second tab 203 arranged at intervals in the Y direction, the design is such that the same type of tabs 201 of adjacent battery cells 20 can be oppositely aligned for subsequent connection operations. The adapter piece structure 10 is designed to connect the tabs 201 of the adjacent battery cells 20 so that current can flow inside the battery cells 20. Each adapter piece structure 10 includes one tab connecting portion 1 which is connectable to two first tabs 202 or two second tabs 203 disposed in alignment. Two adapter piece structures 10 are respectively responsible for connecting two first tabs 202 disposed in alignment and two second tabs 203 disposed in alignment, ensuring separate transmission of current and avoiding the risk of short circuit. The cover plate 30 serves as an external protection structure for the battery cell 20, and two terminals 301 arranged at intervals in the Y direction are provided. The two terminals 301 act as connecting points of the battery cell 20 to the external circuit. The design of the welding area 2111 enables the terminal 301 to be firmly welded to the corresponding adapter piece structure 10, ensuring that current is smoothly transmitted from the inside of the battery cell 20 to the external circuit. By connecting the tabs 201 of adjacent battery cells 20 by the adapter piece structure 10, efficient transmission of the internal current of the battery cells 20 is achieved. This design reduces resistance and energy loss during current transmission. The welding of the terminals 301 on the cover plate 30 to the adapter piece structures 10 ensures a stable connection between the battery cell 20 and the external circuit, and further improves the current transmission efficiency. The spacing arrangement of the battery cells 20 and the ingenious design of the adapter piece structure 10 make the overall structure of the battery cells 20 more stable. This design advantageously reduces the deformation and stress concentration of the battery cell 20 during charging and discharging. The protective effect of the cover plate 30 further enhances the structural stability of the battery cell 20, and improves the durability and safety of the battery cell 20. The transmission of the current to the different terminals 301 by the adapter piece structure 10 avoids the risk of short circuits and improves the safety of the battery cell 20. The sealing and protection of the cover plate 30 also helps to prevent safety accidents such as leakage or explosion in the interior of the battery cell 20.

In an embodiment, the tab connecting portion 1 of one of the two adapter piece structures 10 is welded to two first tabs 202 opposite and aligned. In this way, the tab connecting portion 1 of the adapter piece structure 10 is welded directly to the two first tabs 202 opposite and aligned, thereby reducing the resistance of the current during transmission, and improving the efficiency of current transmission. This design ensures that the current can smoothly flow inside the battery cell 20, reducing energy loss. The manner of welding makes the current path more direct and faster, avoids unnecessary detour of the current during transmission, and further improves transmission efficiency. The welding not only realizes electrical connection, but also functions as mechanical fixing. This makes a firm connection between the tab connecting portion 1 and the first tab 202, which helps to enhance the overall stability of the battery cell structure 100. During charging and discharging of the battery cell 20, changes in current may cause stress. By welding, the risk of loosening or falling of the first tab 202 due to stress change can be reduced, thereby improving the reliability and durability of the battery cell 20. The welding is a standardized connection that facilitates automated and standardized operations during manufacturing and assembly. This helps to improve production efficiency and reduce manufacturing costs. The welding does not require additional connectors or fasteners compared to other attachment means. This helps to simplify the structural design of the battery cell 20, reducing the number and weight of components. The welding ensures close contact between the tab connecting portion 1 and the first tabs 202, and avoids the risk of short circuit due to poor contact. The connection points for welding are clearly visible, which facilitates detection and estimate during maintenance and maintenance. If the connection point is found to be abnormal, repair or replacement can be performed in time. The welding reduces the number and variety of connectors, thereby reducing the probability of failure. When the battery cell 20 fails, it is possible to locate and handle anomalies more quickly.

In an embodiment, the tab connecting portion 1 of the other of the two adapter piece structures 10 is welded to the two second tabs 203 opposite and aligned. In this way, the tab connecting portion 1 of the adapter piece structure 10 is welded directly to the two second tabs 203 opposite and aligned, thereby reducing the resistance of current during transmission, and improving the efficiency of current transmission. This design ensures that the current can smoothly flow inside the battery cell 20, reducing energy losses. The manner of welding makes the current path more direct and faster, avoids unnecessary detour of the current during transmission, and further improves transmission efficiency. The welding not only realizes electrical connection, but also functions as mechanical fixing. This makes a firm connection between the tab connecting portion 1 and the second tab 203, which helps to enhance the overall stability of the battery cell structure 100. During charging and discharging of the battery cell 20, changes in current may cause stress. By welding, the risk of loosening or falling of the second tab 203 due to the stress change can be reduced, thereby improving the reliability and durability of the battery cell 20. The welding is a standardized connection that facilitates automated and standardized operations during manufacturing and assembly. This helps to improve production efficiency and reduce manufacturing costs. The welding does not require additional connectors or fasteners compared to other attachment means. This helps to simplify the structural design of the battery cell 20, reducing the number and weight of components. The welding ensures close contact between the tab connecting portion 1 and the second tabs 203, and avoids the risk of short circuit due to poor contact. The connection points for welding are clearly visible, which facilitates detection and estimate during maintenance and maintenance. If the connection point is found to be abnormal, repair or replacement can be performed in time. The welding reduces the number and variety of connectors, thereby reducing the probability of failure. When the battery cell 20 fails, it is possible to locate and handle anomalies more quickly.

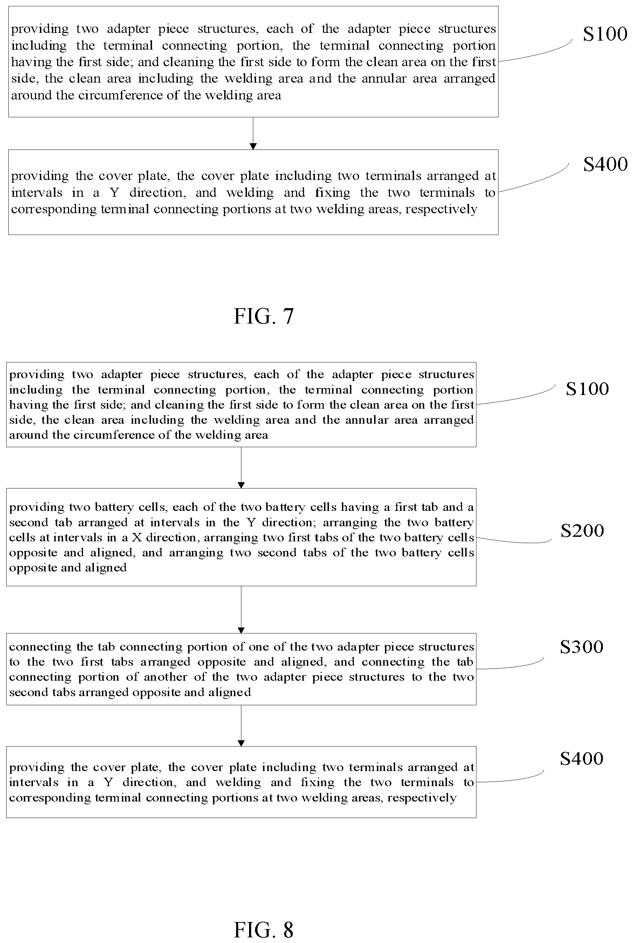

Referring to FIG. 7, in a second aspect, the present application further provides an assembly process of a battery cell structure, the assembly process comprising the steps of:
Step S100, providing two adapter piece structures 10, where each of the two adapter piece structures 10 includes a terminal connecting portion 2 (referring to FIG. 2), the terminal connecting portion 2 has a first side, a cleaning process is performed on the first side 21 to obtain a clean area 211 on the first side 21, and the clean area 211 includes a welding area 2111 and an annular area 2112 provided around the circumference of the welding area 2111.

It should be noted that, referring to FIG. 6, the first side 21 refers to the side of the terminal connecting portion 2 away from the terminal 301. The main purpose of the cleaning process is to remove impurities, oil stains, oxides or other substances that may affect the quality of the connection on the surface of the first side 21 of the terminal connecting portion 2. These impurities may reduce the conductivity of the connection, increase the contact resistance, and even cause the connection to fail. By the cleaning process, the clean area 211 is specified to be formed on the first side 21 of the terminal connecting portion 2. This area includes not only the welding area 2111 directly applied for welding or connecting, but also the annular area 2112 surrounding the welding area 2111. The presence of the annular area 2112 helps to prevent external contaminants from intruding into the welding area 2111 during welding or connecting, thereby improving the purity and stability of the connection. The formation of the clean area 211 provides a good basis for subsequent welding or connecting operations. The cleaning of the welding area 2111 ensures that the welding material (e.g., soldering tin, solder, etc.) can be sufficiently and uniformly adhered between the terminal 301 and the connecting member, thereby forming a good welding joint. The presence of the annular area 2112 further enhances the protective barrier for the welding joint. The terminal connecting portion 2 after the cleaning process can form a high-quality welding or connecting joint, thereby reducing problems such as poor contact and increased resistance due to impurities, oil stains, and the like, and thereby improving the stability and reliability of the entire battery cell structure 100.

The welding area 2111 and the annular area 2112 surrounding the welding area 2111 have various shapes. For example, referring to FIG. 4, in an embodiment, the welding area 2111 has a circular shape and the annular area 2112 has a circular and annular shape. Referring to FIG. 5, in yet another embodiment, the shape of the welding area 2111 is rectangular, and the shape of the annular area 2112 is square and annular. Certainly, in yet another embodiment, the shape of the bonding pad 2111 is circular, and the shape of the annular area 2112 is a square ring. Certainly, in other embodiments, the welding area 2111 may also be an irregular shape, and similarly, the annular area 2112 may be an irregular and annular shape. Illustratively, the shapes of the welding area 2111 and the annular area 2112 may be provided as desired, which is not limited in the present application.

In step S400, the cover plate 30 is provided with two terminals 301 arranged at intervals in the Y direction, and the two terminals 301 are welded to the corresponding terminal connecting portions 2 at two welding areas 2111, respectively (referring to FIG. 3).

It should be noted that, in this step, the terminal connecting portion 2 of the adapter piece structure 10 is provided with the welding area 2111, and the welding area 2111 is provided to be welded to the terminal 301 on the cover plate 30. Welding is a permanent connection in which two metal parts are fused and combined together by high temperatures to form a firm mechanical and electrical connection. The welding has a higher strength than other connection methods (e.g., crimping, riveting, etc.). By welding the terminal 301 to the terminal connecting portion 2, it is possible to ensure that the battery cell structure 100 remains in a stable connection during long-term use, and to reduce faults caused by loose or disconnection. The two terminals 301 arranged at intervals in the Y direction ensure that the current is uniformly distributed in the battery for large-scale energy storage, thereby reducing current concentration and local overheating. At the same time, the welding has a low contact resistance, so that the energy loss can be reduced, and the electrical efficiency of the battery for large-scale energy storage can be improved. The welding not only achieves the electrical connection, but also enhances the structural strength of the battery cell structure 100. This connection can resist the effects of external factors such as vibration, impact, and the like, and ensure that the battery cell structure 100 can still operate normally in a severe environment.

In the embodiment of the present application, the clean area 211 formed after cleaning the first side 21 of the terminal connecting portion 2 includes the welding area 2111 and the annular area 2112 surrounding the welding area 2111. This design is aimed to ensure that the welding area 2111 is in clean state before welding, thereby avoiding welding defects caused by impurities, oxides, and the like, and improving strength and reliability of the welding of the terminal connecting portion 2 to the terminal 301. The clean welding surface helps to reduce poor contact problems caused by corrosion, oxidation, and the like, thereby prolonging the service life of the battery cell structure 100. In addition, the presence of the annular area 2112 helps to prevent external contaminants from intruding into the welding area 2111 during welding or connecting, thereby improving the purity and stability of the connection. The presence of the annular area 2112 further enhances the protective barrier of the welding joint. The cleaned welding area 2111 provides a good basis for subsequent welding or connecting operations, ensuring that solder materials (e.g., soldering tin, solder, etc.) can be sufficiently and uniformly adhered between the terminal 301 and the connecting member, thereby forming a good welding joint. The welding area of the terminal connecting portion 2 after the cleaning process is removed off foreign matters or oxide layers, ensures uniform thermal absorption and conduction during the welding process, and enables the terminal connecting portion 2 and the terminal 301 to form a high-quality welding, thereby improving the stability and reliability of the entire battery cell structure 100. The two terminals 301 arranged at intervals in the Y direction ensure that the current is uniformly distributed in the battery for large-scale energy storage, thereby reducing current concentration and local overheating. At the same time, the welding has a low contact resistance, so that the energy loss can be reduced, and the electrical efficiency of the battery for large-scale energy storage can be improved.

In an embodiment, the step S100 of providing two adapter piece structures 10, where each of the two adapter piece structures 10 includes the terminal connecting portion 2, the terminal connecting portion 2 has the first side, the cleaning process is performed on the first side 21 to obtain the clean area 211 on the first side 21, and the clean area 211 includes the welding area 2111 and the annular area 2112 provided around the circumference of the welding area 2111, further includes:
Step S110, performing cleaning process on the first side 21 of the terminal connecting portion 2 with the laser emitted from the laser device at the predetermined condition.

It should be noted that in the cleaning process by the laser, the laser beam is irradiated to the surface of the terminal connecting portion 2, and the high energy causes the surface contaminants (such as oxides, greases, and dust) to rapidly absorb energy and raise temperature. When the temperature reaches the boiling or decomposition point of the contaminants, the contaminants can vaporize, decompose, or burn, to be removed from the surface. In order to ensure the cleaning effect, the laser device needs to set suitable parameters, such as laser power, spot size, scanning speed, pulse frequency, etc., according to the specific material and species of contaminants. These predetermined conditions achieve the accurate cleaning effect by adjusting the energy distribution and the action time of the laser beam.

In addition, the cleaning process removes contaminants from the surface of the terminal connecting portion 2, thereby improving the cleanliness of the welding area 2111. The cleaning process by the laser improves the laser penetration welding quality of the adapter piece, reduces the welding defects of the adapter piece, roughens the smooth surface of the adapter piece, and changes specular reflection to diffuse reflection in the laser welding process. As such, energy loss and false welding are reduced, and welding reliability is improved. The cleaning process by the laser is pretreated on the welding area, to remove the oxide layers on the surface of the adapter piece, and to ensure uniform thermal absorption and conduction in the welding process. The cleaning process by the laser helps to reduce defects such as air holes and inclusions in the welding process, improve the mechanical and electrical properties in the welding positions, and thereby improving the overall welding quality. By the laser cleaning, contaminants that may cause corrosion or poor electrical contact are removed, the failure of the terminal connecting portion 2 during subsequent use is reduced, and the service life of the battery cell structure 100 is prolonged. The cleaning by the laser is fast and efficient, and large-area cleaning can be completed in a short time. The cleaning process by the laser does not require the use of chemical cleaning agents or large amounts of water resources, reducing environmental pollution and wastewater discharge. Meanwhile, the laser device is high in energy efficiency, relatively low in energy consumption, and conforms to the green manufacturing concept of modern industry.

In an embodiment, the laser power is P, wherein the predetermined conditions include 100W≤P≤700W. During the cleaning process by the laser, the laser power directly determines the energy density irradiating on the surface of the material. The higher the energy density, the more thermal is transferred to the material per unit of time, resulting in an increase in the surface temperature of the material and an increase in the rate and depth of removal of contaminants. When the laser power ranges from 100W to 700W, it is possible to effectively remove the oxide layers on the surface of the adapter piece to ensure uniform thermal absorption and conduction during the welding process. In addition, the surface of the first side 21 can be roughened so that specular reflection changes to diffuse reflection during the laser welding, the energy loss and the welding false are reduced, and the welding reliability is improved. When the laser power is low (<100W), the oxide layers on the surface of the first side 21 are not removed due to insufficient energy density and limited cleaning depth (<0.5µm), and the roughness of the surface of the first side 21 is not sufficient to achieve the effect for the laser welding to reduce the intensity of diffuse reflection, causing most of the energy loss, resulting in the false welding in the subsequent laser penetration welding. When the laser power is high (>700W), the energy density is significantly increased, and the cleaning depth is much greater than 1000µm. Although the surface of the first side 21 can be rapidly heated and the contaminants in the deep layers of the material can be removed, the surface of the first side 21 may be seriously uneven. At this time, the defocus amount of the laser welding fluctuates greatly, so that the welding defects are easily generated.

In an embodiment, the laser frequency is f, wherein the predetermined conditions include 100Hz≤f≤800Hz, as such, the laser frequency determines the number of laser pulses per unit time, i.e., the density of the cleaning points. The higher the frequency, the more cleaning points are generated per unit time, and the greater the density of the cleaning points. When the laser frequency ranges from 100 Hz to 800Hz, the oxide layers on the surface of the adapter piece can be effectively removed to ensure uniform thermal absorption and conduction during the welding process. In addition, the surface of the first side 21 can be roughened, so that specular reflection changes to diffuse reflection during the laser welding, the energy loss and the welding false are reduced, and the welding reliability is improved. When the frequency is lower than 100 Hz, the density of the cleaning points is significantly reduced, resulting in an increase in the spacing between the cleaning points. It may not effectively cover entirely the clean area 211, and partial area of the clean area 211 may not be cleaned. When the frequency is higher than 800Hz, the density of the cleaning points is too high, and adjacent cleaning points may coincide, causing that partial area of the clean area 211 may be irradiated with a plurality of laser pulses, thereby producing an uneven cleaning effect. The cleaning depth is not only affected by the laser power but also regulated by the laser frequency. Although the high-frequency laser pulse can increase the density of the cleaning points, it may lead to excessive cleaning on partial area of the clean area due to a plurality of irradiations, and the cleaning depth exceeds expectations (e.g., >1000µm). Although it is possible to rapidly thermal and remove the contaminants in the deep layers of the material surface, it may lead to serious unevenness of the surface of the first side 21. Thus, the defocus amount of the laser welding fluctuates greatly, which is liable to cause welding defects. In contrast, the low frequency laser pulses may not be able to achieve sufficient cleaning depth due to the low density of the cleaning points. The oxide layers on the surface of the first side 21 are not removed, and the surface roughness on the first side 21 is insufficient to achieve the effect for the laser welding to reduce the intensity of diffuse reflection, causing most of the energy loss, resulting in the false welding in the subsequent laser penetration welding.

In an embodiment, the laser scanning speed is V, wherein the predetermined conditions include 500mm/s≤V≤20000mm/s, as such, the scanning speed V directly determines the area that the laser can cover per unit time. The faster the speed, the greater the area of the material treated per unit time, thereby improving the production efficiency. The laser scanning speed ranges from 500mm/s to 20000mm/s, which helps to maintain the stability and uniformity of the laser energy, thereby achieving a high-quality cleaning or welding effect. In addition, the oxide layers on the surface of the adapter piece can be effectively removed to ensure uniform thermal absorption and conduction in the welding process. In addition, the surface of the first side 21 can be roughened, so that diffuse reflection rather than specular reflection occurs during the laser welding, the energy loss and the welding false are reduced, and the welding reliability is improved. When the scanning speed is lower than 500mm/s, the welding beat (or cleaning cycle) is correspondingly prolonged due to too slow processing speed, resulting in a decrease in the production capacity. When the scanning speed is too high (over 20000mm/s), the irradiating time of the laser beam on the surface of the material is extremely short, which may cause the laser energy to be insufficiently applied to the surface of the material, resulting in energy instability and cleaning unevenness. When the scanning speed is lower than 500mm/s, the production efficiency is significantly reduced, which affects the production capacity.

Referring to FIG. 8, in an embodiment, each of the adapter piece structures 10 further includes a tab connecting portion 1, and the tab connecting portion 1 is connected to the terminal connecting portion 2. Before the step 400 of providing the cover plate 30 with two terminals 301 arranged at intervals in Y direction, and welding the two terminals 301 to corresponding terminal connecting portions 2 at two welding areas 2111, respectively, includes:
Step S200, arranging the two battery cells 20 to be arranged at intervals in the X direction (referring to FIG. 3), arranging two first tabs 202 of the two battery cells 20 to be opposite and aligned, and arranging two second tabs 203 of the two battery cells 20 to be opposite and aligned.

It should be noted that the shapes of the first tab 202 and the second tab 203 may be the same or different, and the shapes of the first tab 202 and the second tab 203 may be set as required, which is not limited in the present application.

Step S300, connecting the tab connecting portion 1 of one of the two adapter piece structures 10 to the two first tabs 202 opposite and aligned, and connecting the tab connecting portion 1 of the other of the two adapter piece structures 10 to the two second tabs 203 opposite and aligned.

In this step, the tab connecting portion 1 of one of the two adapter piece structures 10 is connected to the two first tabs 202 opposite and aligned. For example, the tab connecting portion 1 of one of the two adapter piece structures 10 and the two first tabs 202 opposite and aligned may be latched, bolted, welded, or the like. For example, the connection between the tab connecting portion 1 of one of the two adapter piece structures 10 and the two first tabs 202 opposite and aligned may be selected as required, which is not limited in the present application. The tab connecting portion 1 of the other one of the two adapter piece structures 10 may be connected to the two second tabs 203 opposite and aligned by various connection means, for example, the tab connecting portion 1 of the other one of the two adapter piece structures 10 and the two second tabs 203 opposite and aligned may be latched, bolted, welded, or the like. For example, the connection between the tab connecting portion 1 of the other one of the two adapter piece structures 10 and the two second tabs 203 opposite and aligned may be selected as required, which is not limited in the present application.

In an embodiment, the step 400 of providing the cover plate 30 with two terminals 301 arranged at intervals in Y direction, and welding the two terminals 301 to corresponding terminal connecting portions 2 at two welding areas 2111, respectively, includes:
Step S410, welding one of the two adapter piece structures 10 with one of the two terminals 301 by applying laser to penetrate the one of the two adapter piece structures 10 at one of the two welding areas 2111.

In this step, the laser beam is used to penetrate the adapter piece structure 10 to weld the adapter piece structure 10 with the terminal 301, so that the secure connection between the adapter piece structure 10 and the terminal 301 can be ensured, while maintaining the compactness of the structure and the reliability of the electrical connection. It is also possible to reduce generation of welding defects such as air holes and cracks. The two terminals 301 on the cover plate 30 are arranged at intervals in the Y direction, which helps to avoid mutual interference during the welding process and improves the accuracy and efficiency of the welding. By performing the welding operation on the two welding areas 2111 respectively, it is possible to ensure that each of the welding points can be sufficiently energy input and accurately controlled, thereby improving the welding quality. Due to the energy concentration of laser welding, the thermal stress acting on the material is relatively less, reducing the deformation of the adapter piece structure 10 during welding, and maintaining the dimensional accuracy and flatness of the adapter piece structure 10.

In an embodiment, the step 400 of providing the cover plate 30 with two terminals 301 arranged at intervals in Y direction, and welding the two terminals 301 to corresponding terminal connecting portions 2 at two welding areas 2111, respectively, includes:
Step S420, welding the other of the two adapter piece structures 10 with the other of the two terminals 301 by applying laser to penetrate the other of the two adapter piece structures 10 at the other of the two welding areas 2111.

In this step, laser welding is an efficient and precise welding method using the laser beam with high energy density as the thermal source. In this step, the laser beam is used to penetrate the adapter piece structure 10 to weld the adapter piece structure 10 with the terminal 301, so that the secure connection between the adapter piece structure 10 and the terminal 301 can be ensured, while maintaining the compactness of the structure and the reliability of the electrical connection. It is also possible to reduce generation of welding defects such as air holes and cracks. The two terminals 301 on the cover plate 30 are arranged at intervals in the Y direction, which helps to avoid mutual interference during the welding process and improves the accuracy and efficiency of the welding. By performing the welding operation on the two welding areas 2111 respectively, it is possible to ensure that each of the welding points can be sufficiently energy input and accurately controlled, thereby improving the welding quality. Due to the energy concentration of laser welding, the thermal stress acting on the material is relatively less, reducing the deformation of the adapter piece structure 10 during welding, and maintaining the dimensional accuracy and flatness of the adapter piece structure 10.

An embodiment of the present application further provides a battery for large-scale energy storage. The battery for large-scale energy storage includes the battery cell structure 100. For specific structures of the battery cell structure 100, reference is made to the embodiments. Since all the technical solutions of the embodiments are adopted for the battery for large-scale energy storage, at least all beneficial effects caused by the technical solutions of the embodiments are not described herein.

## Claims

1. An adapter piece structure, comprising:
a tab connecting portion (1), the tab connecting portion (1) being configured to connect with a tab (201) of a battery cell (20); and
a terminal connecting portion (2) connected with the tab connecting portion (1), the terminal connecting portion (2) having a first side (21), the first side (21) having a clean area (211) provided to be cleaned, the clean area (211) including a welding area (2111) and an annular area (2112) arranged around a circumference of the welding area (2111), and the welding area (2111) being configured for welding the terminal connecting portion (2) with a terminal (301) of a cover plate (30).

2. The adapter piece structure (10) according to claim 1, wherein a distance L is defined between a boundary of the welding area (2111) and an outer circumferential boundary of the annular area (2112), and L satisfies: L≥1.0mm.

3. The adapter piece structure (10) according to claim 1, wherein the welding area (2111) has an area S1, the clean area (211) has an area S2, and the first side (21) has a surface area S3, wherein S1, S2 and S3 satisfy: 0<S1/S2<1; and/or 0<S2/S3≤1.

4. The adapter piece structure (10) according to claim 1, wherein the clean area (211) has a depth H, wherein H satisfies: 0.5µm≤H≤1000µm.

5. The adapter piece structure (10) according to claim 1, wherein a groove (31) and a plurality of protrusions (32) are formed at the clean area (211), a plurality of the grooves (31) and the plurality of protrusions (32) are alternately arranged.

6. The adapter piece structure (10) according to any one of claims 1 to 5, wherein the tab connecting portion (1) comprises:
a main body (11), the main body (11) being connected with the terminal connecting portion (2); and
two connecting arms (12), the two connecting arms (12) being arranged opposite and at intervals, ends of the two connecting arms (12) being connected to the main body (11); and
wherein one of the two connecting arms (12) and/or the main body (11) is configured to connect with one of two tabs (201) arranged opposite and aligned of adjacent two battery cells (20), and another of the two connecting arms (12) and/or the main body (11) is configured to connect with another of the two tabs (201) arranged opposite and aligned of the adjacent two battery cells (20).

7. The adapter piece structure (10) according to claim 6, wherein the clean area (211) has an area S2; and
the main body (11) has a second side on a same side as the first side (21), the second side has a surface area S4, and the first side (21) has a surface area S3, wherein S2, S3 and S4 satisfy: S3+S4>S2.

8. A battery cell structure (100), comprising the adapter piece structure (10) according to any one of claims 1 to 7.

9. The battery cell structure (100) according to claim 8, further comprising:
two battery cells (20) arranged at intervals in an X direction, each of the two battery cells (20) having a first tab (202) and a second tab (203) arranged at intervals in a Y direction, two first tabs (202) of the two battery cells (20) being arranged opposite and aligned, and two second tabs (203) of the two battery cells (20) are being arranged opposite and aligned;
two adapter piece structures (10), the tab connecting portion (1) of one of the two adapter piece structures (10) being connected with the two first tabs (202) arranged opposite and aligned, and the tab connecting portion (1) of another of the two adapter piece structures (10) being connected with the two second tabs (203) arranged opposite and aligned; and
the cover plate (30), the cover plate (30) including two terminals (301) arranged at intervals in the Y direction, and the two terminals (301) being welded and fixed to corresponding terminal connecting portions (2) at two welding areas (2111), respectively.

10. The battery cell structure (100) according to claim 9, wherein the tab connecting portion (1) of one of the two adapter piece structures (10) is welded with the two first tabs (202) arranged opposite and aligned; and/or
the tab connecting portion (1) of another of the two adapter piece structures (10) is welded with the two second tabs (203) arranged opposite and aligned.

11. An assembly process for a battery cell structure (100) according to any one of claims 8 to 10, comprising steps of:
providing two adapter piece structures (10), each of the adapter piece structures (10) including the terminal connecting portion (2), the terminal connecting portion (2) having the first side (21); and cleaning the first side (21) to form the clean area (211) on the first side (21), the clean area (211) including the welding area (2111) and the annular area (2112) arranged around the circumference of the welding area (2111); and
providing the cover plate (30), the cover plate (30) including two terminals (301) arranged at intervals in a Y direction, and welding and fixing the two terminals (301) to corresponding terminal connecting portions (2) at two welding areas (2111), respectively.

12. The assembly process for a battery cell structure (100) according to claim 11, wherein step of providing two adapter piece structures (10), each of the adapter piece structures (10) including the terminal connecting portion (2), the terminal connecting portion (2) having a first side (21); and cleaning the first side (21) to form the clean area (211) on the first side (21), the clean area (211) including the welding area (2111) and the annular area (2112) arranged around a circumference of the welding area (2111), comprises:
performing a cleaning process on the first side (21) of the terminal connecting portion (2) with a laser emitted from a laser device under predetermined conditions.

13. The assembly process for a battery cell structure (100) according to claim 12, wherein the laser has a power P, and the predetermined conditions comprise: 100W≤P ≤700W; and/or
the laser has a frequency f, and the predetermined conditions comprise: 100Hz≤f≤800Hz; and/or
the laser has a scanning speed V, and the predetermined conditions comprise: 500mm/s≤V≤20000mm/s.

14. The assembly process for a battery cell structure (100) according to claim 11, wherein each of the adapter piece structures (10) further comprises a tab connecting portion (1), and the tab connecting portion (1) is connected with the terminal connecting portion (2); and the assembly process, before the step of providing a cover plate (30) the cover plate (30) including two terminals (301) arranged at intervals in a Y direction, and welding and fixing the two terminals (301) to corresponding terminal connecting portions (2) at two welding areas (2111), respectively, comprises:
providing two battery cells (20), each of the two battery cells (20) having a first tab (202) and a second tab (203) arranged at intervals in the Y direction;
arranging the two battery cells (20) at intervals in a X direction, arranging two first tabs (202) of the two battery cells (20) opposite and aligned, and arranging two second tabs (203) of the two battery cells (20) opposite and aligned; and
connecting the tab connecting portion (1) of one of the two adapter piece structures (10) to the two first tabs (202) arranged opposite and aligned, and connecting the tab connecting portion (1) of another of the two adapter piece structures (10) to the two second tabs (203) arranged opposite and aligned.

15. The assembly process for a battery cell structure (100) according to claim 11, wherein step of providing the cover plate (30), the cover plate (30) including two terminals (301) arranged at intervals in the Y direction, and welding and fixing the two terminals (301) to corresponding terminal connecting portions (2) at two welding areas (2111), respectively, comprises:
welding and fixing one of the two adapter piece structures (10) with one of the two terminals (301) through applying a laser to penetrate the one of the two adapter piece structures (10) at one of the two welding areas (2111); and/or
welding and fixing another of the two adapter piece structures (10) with another of the two terminals (301) through applying a laser to penetrate the another of the two adapter piece structures (10) at another of the two welding areas (2111).

16. A battery for large-scale energy storage, comprising the battery cell structure (100) according to any one of claims 8 to 10.
